# EUROPÄISCHE PATENTSCHRIFT

(11) **EP 3 659 422 B1**
(45) Veröffentlichungstag und Bekanntmachung des Hinweises auf die Patenterteilung: **01.11.2023**
(21) Anmeldenummer: 18209455.7
(22) Anmeldetag: 30.11.2018
(51) Int. Cl.: A01D 41/14, A01D 57/20, A01D 61/00, A01D 61/02, B65G 15/44, B65G 15/46

(54) **VERBINDUNGSELEMENT ZUR BEFESTIGUNG VON MITNEHMERN AN EINEM FÖRDERGURT**
CONNECTING ELEMENT FOR ATTACHING CLEATS ON A CONVEYOR BELT
ÉLÉMENT DE RACCORDEMENT PERMETTANT DE FIXER DES DISPOSITIFS ENTRAÎNEURS À UNE BANDE TRANSPORTEUSE

(43) Veröffentlichungstag der Anmeldung: 03.06.2020
(73) Patentinhaber: Noltewerk GmbH & Co. KG, 48268 Greven (DE)
(72) Erfinder: NOLTE, Nils, 48165 Münster (DE)
(74) Vertreter: Lenzing Gerber Stute

(56) Entgegenhaltungen:
- DE-A1-102010 054 829
- DE-A1-102013 112 274
- GB-A- 788 898
- US-A- 3 976 192
- US-A- 4 281 760

## Beschreibung

Die vorliegende Erfindung betrifft eine Fördergurtanlage mit den Merkmalen des Oberbegriffs des Anspruchs 1 und ein Verfahren zum Befestigen von Mitnehmern an einem Fördergurt mit den Merkmalen des Oberbegriffs des Anspruchs 11.

Fördergurte mit sogenannten Stollen, die als Mitnehmer auf der Oberfläche angeordnet sind, sind aus der Praxis bekannt. In der Landwirtschaft z. B. werden solche Fördergurte zum Fördern von Erntegut eingesetzt. Insbesondere können solche Fördergurte auch in Erntemaschinen eingesetzt werden, in denen hinter einer Erntemaschine, insbesondere hinter einem Mähwerk, ein Förderer quer zur Fahrtrichtung der Erntemaschine angeordnet ist und das Fördergut aus dem Arbeitsweg der Erntemaschine heraus zur Seite befördert. Die Mitnehmer oder Stollen werden bei den bekannten Ausführungsformen mit Bohrungen versehen und dann unter Verwendung von kreisrunden oder ovalen Unterlegscheiben mit dem Fördergurt vernietet oder verschraubt.

US 2,875,887 A offenbart einen solchen Fördergurt mit Mitnehmer, die auf der Oberseite des Fördergurtes quer zu der Laufrichtung des Gurtes befestigt sind, wobei der Fördergurt an den Mitnehmern mittels einer Unterlegscheibe und einer Schraube von der Unterseite her befestigt ist. Ein weiteres Beispiel ist aus dem Dokument US4281760A bekannt.

Es ist Aufgabe der vorliegenden Erfindung, eine Fördergurtanlage mit auf einem Fördergurt befestigten Mitnehmern zu schaffen, bei der die Montage der Mitnehmer an dem Fördergurt besonders einfach und kostengünstig ist.

Die Aufgabe wird von einer Fördergurtanlage mit den Merkmalen des Anspruchs 1 und einem Verfahren zum Befestigen von Mitnehmer an einem Fördergurt mit den Merkmalen des Anspruchs 11 gelöst.

Demnach ist eine Fördergurtanlage mit einem Fördergurt und mit an dem Fördergurt auf einer Oberseite befestigten Mitnehmern vorgesehen, wobei die Mitnehmer zur Oberseite des Fördergurtes zugewandte Ausnehmungen zum Einsetzen eines Verbindungselements aufweisen, und ein Mitnehmer an dem Fördergurt mittels eines in den Fördergurt und in die Ausnehmung von der Unterseite des Fördergurtes her eingepressten Verbindungselementes verbunden und kraftschlüssig gehalten sind, wobei das Verbindungselement Widerhaken aufweist, die das Verbindungselement mit dem Mitnehmer verbinden und sich die Widerhaken entgegen der Einsetzrichtung des Verbindungselementes erstrecken. Die Verbindungselemente erlauben eine besonders einfache Montage, da sie lediglich in den Fördergurt und den Mitnehmer von einer Seite her eingepresst werden. Ein Verschrauben ist nicht notwendig. Da das Verbindungselement von der Unterseite des Fördergurtes her den Fördergurt durchsetzt und in die Ausnehmung gepresst wird, wird der Mitnehmer an dem Fördergurt gehalten, ohne das das Verbindungselement über den Mitnehmer übersteht. Der Fördergurt kann so im Rücklauf auch über einen Tisch zurückgeführt werden. Bei den Mitnehmern handelt es sich bevorzugt um Stollen.

Die Ausnehmungen sind bevorzugt Sack- und/oder Durchgangslöcher.

Vorzugsweise ist die Verbindung unlösbar.

Es ist bevorzugt, dass das Verbindungselement den Mitnehmer zumindest teilweise durchsetzt, und zwar derart, dass das Verbindungselement die Oberseite des Mitnehmers nicht überragt.

Bevorzugt ist das Verbindungselement ein Stift mit einem Kopf und einem daran anschließenden Grundkörper, wobei der Kopf sich mit seiner Unterseite auf der Unterseite des Fördergurtes abstützt. Der Kopf ist bevorzugt rund oder oval ausgestaltet. Dabei ist es vorteilhaft, wenn die Widerhaken an dem Grundkörper des Verbindungselementes angeordnet sind.

Das Verbindungselement ist vorzugsweise ein Treibstift oder ein Tannbaumclip. Es kann aber auch eine Spreizniete oder ein gezahnter Bolzen sein.

Vorzugsweise ist das Verbindungselement aus Kunststoff oder Metall gefertigt.

Es kann vorgesehen sein, dass der Kopf des Verbindungselementes länglich-oval ausgebildet ist und im eingepressten Zustand mit der längsten Erstreckung quer zu der Förderrichtung liegt. Dabei ist es bevorzugt, dass der Kopf im eingepressten Zustand mit der kürzesten Erstreckung in Förderrichtung liegt.

Weiterhin ist ein Verfahren zum Befestigen von Mitnehmern an einem Fördergurt mit folgenden Verfahrensschritten vorgesehen:
- Bereitstellen von Mitnehmern, die Ausnehmungen zur Befestigung des Mitnehmers an dem Fördergurt aufweisen;
- Platzieren der Mitnehmer auf der Oberseite des Fördergurtes und jeweils Einpressen eines Verbindungselementes in den Fördergurt und in die Ausnehmung des Mitnehmers, von der Unterseite des Fördergurtes her, zur Verbindung der Mitnehmer mit dem Fördergurt.

Dieses Verfahren kann vollautomatisch beispielsweise mittels eines Roboters ausgeführt werden. Durch das Einpressen wird eine einfach herzustellende unlösbare Verbindung geschaffen.

Dabei ist es bevorzugt, wenn das Verbindungselement ein Stift mit einem Kopf und einem Grundkörper ist, wobei an dem Grundkörper Widerhaken vorgesehen sind, die sich entgegen der Einsetzrichtung des Verbindungselementes erstrecken und beim Einpressen in den Mitnehmer mit diesem einen Formschluss ermöglichen.

Nachfolgend wird ein Ausführungsbeispiel der vorliegenden Erfindung anhand der Zeichnung beschrieben. Es zeigen:
- Figur 1:: eine schematische Darstellung einer Fördergurtanlange im Bereich einer Umlenkung,
- Figur 2:: eine Seitenansicht eines Verbindungselementes, sowie
- Figur 3:: eine schematische Darstellung eines Fördergurts mit Rücklauf über einen Tisch.

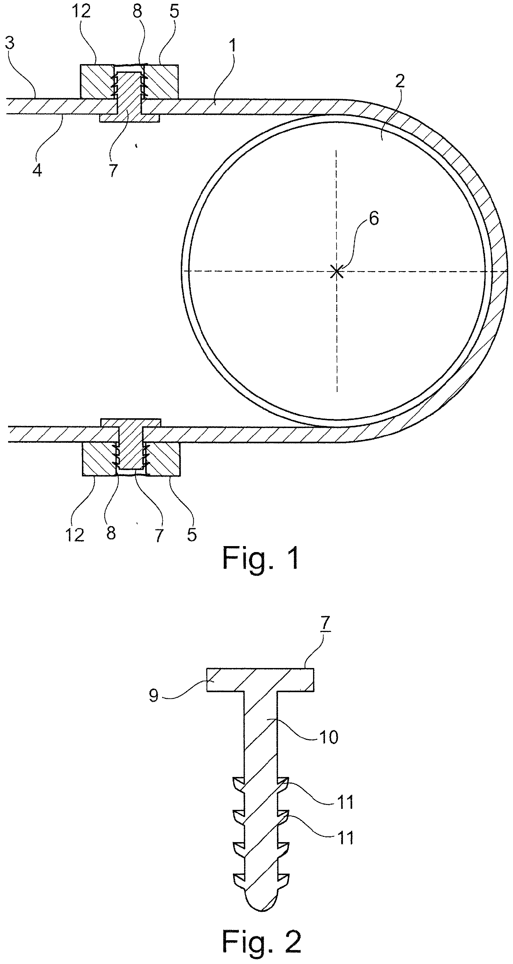

Die Figur 1 zeigt eine Fördergurtanlage mit einem Fördergurt 1, der über eine Umlenkrolle 2 um 180° umgelenkt ist. Der Fördergurt 1 weist eine Oberseite 3 auf, die im Betrieb dem Produkt oder Erntegut zugewandt ist, so wie eine untere Seite 4, die der Umlenkrolle 2 zugewandt ist. Dargestellt sind zwei Mitnehmer 5 auf dem Fördergurt 1, die über die Oberseite 3 hinaus stehen. Die Mitnehmer 5 sind stangenförmig, gestreckt ausgebildet und in Längsrichtung parallel zu einer Drehachse 6 der Umlenkrolle 2 ausgerichtet.

Die Mitnehmer 5 sind auf der Oberseite 3 des Fördergurts 3 angeordnet und mit dem Fördergurt 1 mittels Verbindungselementen 7 befestigt. Die Mitnehmer 5 weisen Durchgangsbohrungen 8 auf. Es können anstelle der Durchgangsbohrungen 8 auch beispielsweise Sacklöcher vorgesehen sein. Die Verbindungselemente 7 durchsetzen den Fördergurt 1 in Richtung von der Unterseite 4 zu der Oberseite 3 und werden in die jeweilige Durchgangsbohrung 8 eingepresst. Vorzugsweise sind die Verbindungselemente 7 so dimensioniert, dass sie nicht über eine Oberseite 12 der Mitnehmer vorstehen.

Die Verbindungselemente 7 werden in den Fördergurt 3 und die Mitnehmer 5 eingepresst. Der Fördergut 3 weist dafür keine Ausnehmungen oder Bohrungen auf.

Entlang eines Mitnehmers 5 sind mehrere Durchgangsbohrungen zur Befestigung an dem Fördergurt vorgesehen. Die Verbindungslinie der Durchgangsbohrungen verläuft möglichst exakt quer zu der Laufrichtung, die der Längsrichtung des Fördergurtes 1 entspricht.

Je nach Bedarf werden weitere Mitnehmer 5 quer zu der Förderrichtung über die Längserstreckung des Fördergurtes 1 angeordnet, wobei die Mitnehmer 5 zueinander parallel ausgerichtet sind.

Figur 2 zeigt eine Ausführungsform eines Verbindungselementes 7. Das Verbindungselement weist einen Kopf 9 und einen Grundkörper 10 auf. An dem Grundkörper 10 sind Widerhaken 11 vorgesehen, die dem Verbindungselement 7 beim Einbringen in den Mitnehmer 5 halt geben und ein unerwünschtes Lösen verhindern. Die von dem Grundkörper 10 vorstehenden Widerhaken 11 erstrecken sich in Richtung des Kopfes 9 des Verbindungselementes, entgegen der Einsetzrichtung des Verbindungselementes. Die Widerhaken 11 können rotationssymmetrisch ausgebildet sein und sich durchgängig entlang des Umfanges des Grundkörpers erstrecken oder gleichmäßig über diesen verteilt sein. Je nach Bedarf kann die Anzahl der Widerhaken entlang des Grundkörpers angepasst werden. Während des Einsetzens legen sich die Widerhaken an dem Grundkörper an und spreizen sich dann im eingepressten Zustand ab, um Hinterschneidungen zu bilden.

Das Verbindungselement 7 kann wie in Figur 2 dargestellt, ein Stift sein und als Treibstift oder als Tannbaumclip (auch Halteclip genannt) ausgestaltet sein. Es kann auch vorgesehen sein, dass das Verbindungselement eine Spreizniete oder ein gezahnter Bolzen ist. Die Spreizniete wird in den Fördergurt gesteckt und ragt in die Ausnehmung des Mitnehmers. Durch Einbringen eines Stiftes in eine zentrale Öffnung wird die Spreizniete aufgespreizt und verbindet sich fest mit dem Mitnehmer.

Das Verbindungselement kann aus Stahl gefertigt oder auch aus Kunststoff, insbesondere aus Polyamid spritzgeformt sein.

Der Kopf 9 des Verbindungselements 7 kann länglich-oval ausgebildet sein, wobei sich der Kopf 9 in einer Ebene senkrecht zum Grundkörper 10 erstreckt. Die Orientierung der länglich-oval ausgebildeten Köpfe 9 ist im eingepressten Zustand so gewählt, dass sie mit ihrer längsten Erstreckung quer zu der Förderrichtung liegen. Die Köpfe 9 liegen mit ihrer kurzen Achse in Laufrichtung, so dass die Umlenkung des Förderers an einer Umlenkrolle nicht behindert wird.

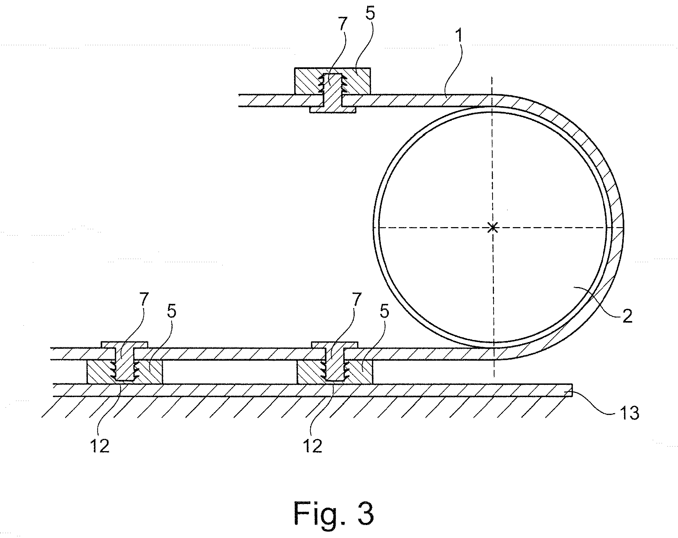

Figur 3 zeigt einen Förderer mit auf einem Fördergurt 1 angeordneten Mitnehmern 5, wobei der Fördergurt 1 über eine Umlenkrolle 2 um 180° umgelenkt ist. Die Mitnehmer 5 sind wie oben beschrieben, an dem Fördergurt 1 befestigt. Die Rückführung des Fördergurtes 1 erfolgt über einen Tisch 13. Die Verbindungselemente 7 sind dabei so dimensioniert, dass sie nicht über die Oberseite 12 der Mitnehmer überstehen, so dass der Rücklauf des Fördergurtes 1 über den Tisch 13 nicht behindert wird.

## Patentansprüche

1. Fördergurtanlage mit einem Fördergurt (1) und mit an dem Fördergurt (1) auf einer Oberseite (3) befestigten Mitnehmern (5), wobei die Mitnehmer (5) zur Oberseite des Fördergurtes (3) zugewandte Ausnehmungen (8) zum Einsetzen eines Verbindungselements (7) aufweisen, und wobei die Mitnehmer (5) an dem Fördergurt (1) jeweils mittels eines in den Fördergurt (1) und in die Ausnehmung (8), von der Unterseite des Fördergurtes (4) her eingepressten Verbindungselementes (7) verbunden und kraftschlüssig gehalten sind, **dadurch gekennzeichnet, dass** das Verbindungselement (7) Widerhaken (11) aufweist, die das Verbindungselement (7) mit dem Mitnehmer (5) verbinden und sich die Widerhaken (11) entgegen der Einsetzrichtung des Verbindungselementes (7) erstrecken..

2. Fördergurtanlage nach Anspruch 1, **dadurch gekennzeichnet, dass** die Verbindung kraftschlüssig ist.

3. Fördergurtanlage nach Anspruch 1 oder 2, **dadurch gekennzeichnet, dass** das Verbindungselement (7) den Mitnehmer (5) zumindest teilweise durchsetzt, derart, dass das Verbindungselement (7) eine Oberseite (12) des Mitnehmers (5) nicht überragt.

4. Fördergurtanlage nach einem der vorhergehenden Ansprüche, **dadurch gekennzeichnet, dass** das Verbindungselement (7) ein Stift mit einem Kopf (9) und einem daran anschließenden Grundkörper (10) ist, wobei der Kopf (9) sich mit seiner Unterseite auf der Unterseite des Förder-gurtes (4) im eingepressten Zustand abstützt.

5. Fördergurtanlage nach einem der vorhergehenden Ansprüche, **dadurch gekennzeichnet, dass** die Widerhaken (11) an dem Grundkörpers (10) des Verbindungselementes (7) angeordnet sind.

6. Fördergurtanlage nach einem der vorhergehenden Ansprüche, **dadurch gekennzeichnet, dass** das Verbindungselement (7) ein Treibstift oder ein Tannbaumclip ist.

7. Fördergurtanlage nach einem der vorhergehenden Ansprüche 1 bis 5, **dadurch gekennzeichnet, dass** das Verbindungselement (7) eine Spreizniete ist.

8. Fördergurtanlage nach einem der vorhergehenden Ansprüche, **dadurch gekennzeichnet, dass** das Verbindungselement (7) aus Kunststoff gefertigt ist.

9. Fördergurtanlage nach einem der vorhergehenden Ansprüche 4 bis 8, **dadurch gekennzeichnet, dass** der Kopf (9) des Verbindungselementes länglich-oval ausgebildet ist und im eingepressten Zustand mit der längsten Erstreckung quer zu einer Längsrichtung des Fördergurtes liegt.

10. Fördergurtanlage nach einem der vorhergehenden Ansprüche 4 bis 9, **dadurch gekennzeichnet, dass** der Kopf (9) im eingepressten Zustand mit der kürzesten Erstreckung in Längsrichtung des Fördergurtes (1) liegt.

11. Verfahren zum Befestigen von Mitnehmern (5) an einem Fördergurt (1) aufweisend folgende Verfahrensschritte:
• Bereitstellen von Mitnehmern (5), die Ausnehmungen (8) zur Befestigung der Mitnehmer (5) an dem Fördergurt (1) aufweisen;
• Platzieren der Mitnehmer (5) auf der Oberseite des Fördergurtes (3);
• Einpressen eines Verbindungselementes (7) in den Fördergurt (1) und in eine entsprechende Ausnehmung eines Mitnehmers (8), von der Unterseite des Fördergurtes (4) her, zur kraftschlüssigen Verbindung des Mitnehmers (5) mit dem Fördergurt (1), wobei das Verbindungselement (7) ein Stift mit einem Kopf (9) und einem Grundkörper (10) ist, und wobei an dem Grundkörper (10) Widerhaken (11) vorgesehen sind, die sich entgegen der Einsetzrichtung des Verbindungselementes (7) erstrecken.

## Claims

1. Conveyor belt system having a conveyor belt (1) and having drivers (5) fastened to the conveyor belt (1) on an upper side (3), wherein the drivers (5) have recesses (8) facing the upper side of the conveyor belt (3) for the insertion of a connecting element (7), and wherein the drivers (5) are connected to the conveyor belt (1) in each case by means of a connecting element (7) pressed into the conveyor belt (1) and into the recess (8), from the underside of the conveyor belt (4), **characterized in that** the connecting element (7) has barbs (11) which connect the connecting element (7) to the driver (5), and the barbs (11) extend counter to the insertion direction of the connecting element (7)..

2. Conveyor belt system according to claim 1, **characterized in that** the connection is non-positive.

3. Conveyor belt system according to claim 1 or 2, **characterized in that** the connecting element (7) passes at least partially through the driver (5) in such a way that the connecting element (7) does not project beyond an upper side (12) of the driver (5).

4. Conveyor belt system according to one of the preceding claims, **characterized in that** the connecting element (7) is a pin with a head (9) and a base body (10) adjoining it, the head (9) being supported with its underside on the underside of the conveyor belt (4) in the pressed-in state.

5. Conveyor belt system according to one of the preceding claims, **characterized in that** the barbs (11) are arranged on the base body (10) of the connecting element (7).

6. Conveyor belt system according to one of the preceding claims, **characterized in that** the connecting element (7) is a driving pin or a fir tree clip.

7. Conveyor belt system according to any of the preceding claims 1 to 5, **characterized in that** the connecting element (7) is an expanding rivet.

8. Conveyor belt system according to one of the preceding claims, **characterized in that** the connecting element (7) is made of plastic.

9. Conveyor belt system according to one of the preceding claims 4 to 8, **characterized in that** the head (9) of the connecting element is of elongated-oval design and, in the pressed-in state, lies with the longest extension transverse to a longitudinal direction of the conveyor belt.

10. Conveyor belt system according to one of the preceding claims 4 to 9, **characterized in that**, in the pressed-in state, the head (9) lies with its shortest extension in the longitudinal direction of the conveyor belt (1).

11. Method for attaching drivers (5) to a conveyor belt (1), comprising the following method steps:
• Providing drivers (5) having recesses (8) for attaching the drivers (5) to the conveyor belt (1);
• Placing the drivers (5) on the upper side of the conveyor belt (3);
• Pressing a connecting element (7) into the conveyor belt (1) and into a corresponding recess (8) of a driver, from the underside of the conveyor belt (4), for the non-positive connection of the driver (5) to the conveyor belt (1), the connecting element (7) being a pin with a head (9) and a base body (10), and barbs (11) being provided on the base body (10), which barbs extend counter to the insertion direction of the connecting element (7).

## Revendications

1. Installation à bande convoyeuse, équipée d'une bande convoyeuse (1) et d'organes d'entraînement (5) fixés à ladite bande convoyeuse (1), sur une face supérieure (3),
les organes d'entraînement (5) étant munis d'évidements (8) qui pointent vers la face supérieure (3) de la bande convoyeuse et sont dédiés à l'insertion d'un élément de liaison (7), et
lesdits organes d'entraînement (5) étant respectivement reliés à la bande convoyeuse (1), et retenus par engagement positif, au moyen d'un élément de liaison (7) emboîté à force dans ladite bande convoyeuse (1) et dans l'évidement (8), à partir de la face inférieure (4) de ladite bande convoyeuse,
**caractérisée par le fait que**
l'élément de liaison (7) est pourvu d'ardillons (11) reliant ledit élément de liaison (7) à l'organe d'entraînement (5), et lesdits ardillons (11) s'étendent en sens inverse de la direction d'insertion dudit élément de liaison (7).

2. Installation à bande convoyeuse, selon la revendication 1, **caractérisée par le fait que** la liaison est instaurée par engagement positif.

3. Installation à bande convoyeuse, selon la revendication 1 ou 2, **caractérisée par le fait que** l'élément de liaison (7) traverse au moins partiellement l'organe d'entraînement (5), de façon telle que ledit élément de liaison (7) ne dépasse pas au-delà d'une face supérieure (12) dudit organe d'entraînement (5).

4. Installation à bande convoyeuse, selon l'une des revendications précédentes, **caractérisée par le fait que** l'élément de liaison (7) est une broche comprenant une tête (9) et un corps de base (10) se rattachant à cette dernière, laquelle tête (9) prend appui par sa face inférieure, à l'état emboîté à force, contre la face inférieure (4) de la bande convoyeuse.

5. Installation à bande convoyeuse, selon l'une des revendications précédentes, **caractérisée par le fait que** les ardillons (11) sont disposés sur le corps de base (10) de l'élément de liaison (7).

6. Installation à bande convoyeuse, selon l'une des revendications précédentes, **caractérisée par le fait que** l'élément de liaison (7) est une cheville enfonçable ou une barrette à barbillons.

7. Installation à bande convoyeuse, selon l'une des revendications 1 à 5 précédentes, **caractérisée par le fait que** l'élément de liaison (7) est un rivet expansible.

8. Installation à bande convoyeuse, selon l'une des revendications précédentes, **caractérisée par le fait que** l'élément de liaison (7) est fabriqué en matière plastique.

9. Installation à bande convoyeuse, selon l'une des revendications 4 à 8 précédentes, **caractérisée par le fait que** la tête (9) de l'élément de liaison est de réalisation ovale allongée et est orientée à l'état emboîté à force, par son étendue la plus longue, transversalement par rapport à une direction longitudinale de la bande convoyeuse.

10. Installation à bande convoyeuse, selon l'une des revendications 4 à 9 précédentes, **caractérisée par le fait que** la tête (9) est orientée à l'état emboîté à force, par son étendue la plus courte, dans la direction longitudinale de la bande convoyeuse (1).

11. Procédé de fixation d'organes d'entraînement (5) à une bande convoyeuse (1), comportant les étapes opératoires suivantes consistant à :
• apprêter des organes d'entraînement (5) munis d'évidements (8) conçus pour fixer lesdits organes d'entraînement (5) à la bande convoyeuse (1) ;
• mettre en place lesdits organes d'entraînement (5) sur la face supérieure (3) de ladite bande convoyeuse ;
• emboîter à force un élément de liaison (7) dans la bande convoyeuse (1) et dans un évidement correspondant (8) d'un organe d'entraînement, à partir de la face inférieure (4) de ladite bande convoyeuse, en vue d'instaurer la liaison par engagement positif dudit organe d'entraînement (5) avec ladite bande convoyeuse (1), sachant que l'élément de liaison (7) est une broche pourvue d'une tête (9) et d'un corps de base (10), et sachant que des ardillons (11) sont prévus sur ledit corps de base (10) et s'étendent en sens inverse de la direction d'insertion dudit élément de liaison (7).
